# EUROPÄISCHE PATENTSCHRIFT

(11) **EP 2 452 555 B1**
(45) Veröffentlichungstag und Bekanntmachung des Hinweises auf die Patenterteilung: **16.05.2018**
(21) Anmeldenummer: 11185878.3
(22) Anmeldetag: 20.10.2011
(51) Int. Cl.: A01G 9/033

(54) **Pflanzenziegel, dessen Herstellung sowie die Verwendung von Pflanzenziegeln zur Erstellung einer Pflanzendecke**
Plant brick, production of same and use of plant bricks to produce a plant covering
Brique de plantes, sa fabrication et l'utilisation de briques de plantes pour la production d'une couverture végétale

(30) Priorität: 12.11.2010 CH 19042010
(43) Veröffentlichungstag der Anmeldung: 16.05.2012
(73) Patentinhaber: Labhart, Daniel, 5503 Schafisheim (CH)
(72) Erfinder: Labhart, Daniel, 5503 Schafisheim (CH)
(74) Vertreter: Spierenburg, Pieter

(56) Entgegenhaltungen:
- WO-A1-2005/004578
- DE-A1- 19 707 100
- DE-U1-202007 012 632
- US-A1- 2007 079 547
- US-B1- 6 216 389

## Beschreibung

Die Erfindung bezieht sich auf einen Pflanzenziegel gemäss dem Oberbegriff des Patentanspruchs 1 sowie dessen Herstellung gemäss Patentanspruch 5 und die Verwendung der Pflanzenziegel zur Erstellung einer Pflanzendecke gemäss Patentanspruch 7.

Pflanzenziegel zum Auflegen auf erdgebundene Flächen sind bekannt. Sie finden Verwendung zur raschen Begrünung bzw. Bepflanzung im Gartenbau, im Liegenschaftsunterhalt, in öffentlichen Anlagen oder auch zur Begrünung von Strassenböschungen. Die in Gärtnereien vorgefertigten Pflanzenziegel bestehen meist aus einer Trägerschicht aus pflanzlichen Fasern wie beispielsweise Kokosfasern. Auf der Trägerschicht ist ein Substrat aufgebracht. Die in das Substrat eingebrachten Pflanzen verwachsen mit den Fasern der Trägerschicht zu einer festen Einheit. Die fertigen Pflanzenziegel werden an ihrem Bestimmungsort verlegt. Hier verwachsen die Pflanzen im Laufe der Zeit mit dem darunterliegenden Erdreich, wo dann längerfristig die Trägerschicht verrottet. Die Veröffentlichung WO 0001216-A1 lehrt beispielsweise ein derartiges Vegetationselement zum Auflegen auf erdgebundene Flächen, bei welchem die Unterseite der Trägerschicht des Vegetationselementes mit einer Folie zur Auflage auf die erdgebundene Fläche verbunden ist. Als Trägerschicht sind Kokosfasern vorgesehen, welche zumindest teilweise durch ein Bindemittel miteinander und mit der Folie verklebt sind. Die Folie besteht aus einem Material, welches eine Zersetzung durch natürliche Zersetzungsprozesse gewährleistet. Perforationen in der Folie ermöglichen, dass die in der Trägerschicht befindlichen Pflanzen durch die Folie hindurch in den darunter liegenden Erdboden einwachsen können. Der Nachteil dieser Vegetationselemente ist einerseits der relativ komplexe und aufwendige Aufbau eines einzelnen Vegetationselementes aus Trägerschicht und der mit dieser verbundenen Folie. Andererseits besteht die Trägerschicht aus Kokosfasern, also aus Zellulose und ligninhaltigen Fasern, die nur langsam im Boden verrotten und während des Verrottungsprozesses dem Boden Nährstoffe entziehen. Ein weiterer Pflanzenziegel mit ähnlichen Nachteilen ist aus der US 2007/0079547 A1 bekannt.

Es ist die Aufgabe der vorliegenden Erfindung, einen Pflanzenziegel zu schaffen, dessen Trägerschicht aus leicht verrottbarem Material besteht. Weiter hat sich die Erfindung zur Aufgabe gestellt, ein Verfahren zur einfachen Herstellung der Pflanzenziegel, sowie die Verwendung der Pflanzenziegel zur Herstellung einer Pflanzendecke nach einem Konzept vorzuschlagen.

Diese Aufgaben werden von einem Pflanzenziegel mit den Merkmalen des Anspruchs 1, mit dem Verfahren zur Herstellung des Pflanzenziegels nach Anspruch 6 sowie der Verwendung des Pflanzenziegels nach Anspruch 8 gelöst.

Die Grundidee dieser Lösung ist, einen Pflanzenziegel bereit zu stellen, der sehr einfach herzustellen ist, dessen Trägerschicht und Substrat aus möglichst heimischen und ökologisch nachhaltigen Produkten besteht. Zu diesem Zweck werden als Trägerschicht Matten aus genadelter Schafwolle eingesetzt und als Substrat bodenunabhängige, gärtnerübliche Kulturerde verwendet, die jedoch keinen Torf und keine Kokosfaseranteile enthält. Der Vorteil der Schafwollmatten gegenüber den bis anhin verwendeten Kokosfasern liegt darin, dass die zum grössten Teil aus Proteinen bestehende Schafwolle rascher verrottet und dabei Nährstoffe an den Boden abgibt. Sie wirkt so während der gesamten Verrottungsdauer als Dünger für die Pflanzen. Kokosfasern hingegen bestehen aus Lignin und Zellulose und sind wesentlich beständiger, verrotten nur sehr langsam und entziehen bei der Verrottung dem Boden Nährstoffe. Ausserdem ist Schafwolle ein heimisches, nachwachsendes Produkt, und kann für diese Zwecke unabhängig ihrer Qualität verwendet werden kann. Ein weiterer grosser Vorteil der Schafwollmatte ist, dass sie sehr viel Feuchtigkeit speichern kann, was für die Bepflanzung von Vorteil ist. Die Pflanzen wurzeln sehr schnell in die Schafwollmatte ein, wodurch sich ein dreilagiger Verbund aus Pflanzen, Substrat und Schafwollfasern bildet. Die Schafwollmatten sind lichtdicht, so dass kein Licht durch die verlegten Pflanzenziegel dringt. Dadurch wird das Nachwachsen von unerwünschten Pflanzen unter den verlegten Pflanzenziegeln praktisch verunmöglicht.

Die etwa 0.2 m² grossen Pflanzenziegeln werden systematisch mit ausgewählten, vorkultivierten Pflanzen bepflanzt, so dass für den Verkauf ein Sortiment unterschiedlicher Kategorien von Pflanzenziegel zur Verfügung steht. Ein Pflanzenziegel beinhaltet bodendeckende Stauden, blühende Pflanzen und dergleichen, ein etwa im Zentrum des Pflanzenziegels angeordnetes dominierendes Gewächs, sowie Knollen oder Zwiebelpflanzen. Eine Kategorie von Pflanzenziegeln beinhaltet im Grossen und Ganzen eine etwa gleichartige Bepflanzung. Die einzelnen Kategorien von Pflanzenziegeln unterscheiden sich beispielsweise durch die Höhe der Pflanzen, insbesondere der dominierenden Solitärstauden im Zentrum des Pflanzenziegels, durch die Farbe der Blüten, deren Blütenzeit oder ob sie mit Pflanzen für bevorzugt schattige oder bevorzugt sonnige Lage bestückt sind. Durch die Bereitstellung von etwa 10 bis 15 Kategorien von Pflanzenziegel ist es möglich, eine flächendeckende Bepflanzung mit dem erfindungsgemässen Pflanzenziegel im Voraus derart zu konzipieren, dass beispielsweise von Frühjahr bis Herbst Pflanzen mit vorbestimmten Blütenfarben blühen, oder dass an vorgegebenen Stellen flach wachsende und an anderen Stellen in die Höhe wachsende Stauden angeordnet sind.

Weitere Vorteile der Erfindung folgen aus den abhängigen Patentansprüchen und aus der nachfolgenden Beschreibung, in welcher der erfindungsgemässe Pflanzenziegel anhand eines in den Zeichnungen dargestellten Ausführungsbeispiels, sowie dessen Herstellung und dessen Verwendung zur Erstellung einer Pflanzendecke näher erläutert werden.

Es zeigen:
- Fig. 1: einen teilweise aufgeschnittenen Pflanzenziegel in einer Staudenkiste in einer schematischen Darstellung zum Zeitpunkt der Herstellung;
- Fig. 2: mehrere aneinandergelegte Pflanzenziegel einer ersten Kategorie mit flach wachsenden Stauden, schematisch dargestellt;
- Fig. 3: mehrere aneinandergelegte Pflanzenziegel einer zweiten Kategorie mit hoch wachsenden Stauden, schematisch dargestellt;
- Fig. 4: eine aus Pflanzenziegeln verschiedener Kategorien nach einem Konzept erstellte Pflanzendecke in einer schematischen Darstellung;

In den Figuren sind für dieselben Elemente jeweils dieselben Bezugszeichen verwendet worden und erstmalige Erklärungen betreffen alle Figuren, wenn nicht ausdrücklich anders erwähnt.

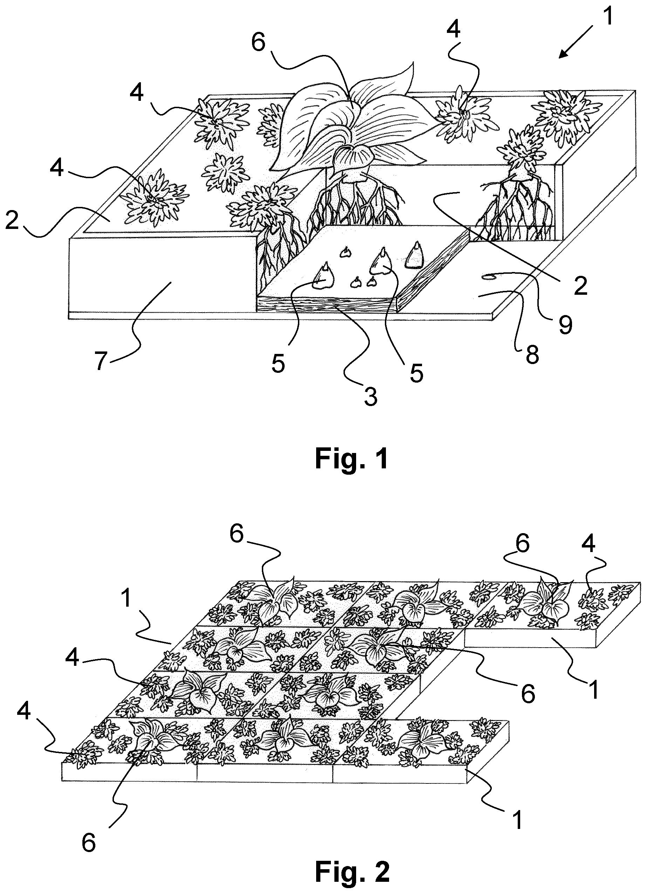

Die Figur 1 zeigt in einer schematischen Darstellung einen teilweise aufgeschnitten Pflanzenziegel 1 in einer Staudenkiste 7 zum Zeitpunkt der Herstellung des Pflanzenziegels 1 bestehend aus einer Trägerschicht 3 und einem Substrat 2. Die Grundfläche des Pflanzenziegels 1 beträgt etwa 0.2 m² mit den Aussenmassen von ca. 36,5 x 56,5 cm und seine Dicke liegt zwischen 3-15 cm. Der Pflanzenziegel 1 besteht schliesslich aus drei Schichten. Als Trägerschicht 3 dient eine etwa 0.5 cm bis 4 cm dicke, genadelte Schafwollmatte 3. Darauf aufgetragen ist gärtnerisches Kultursubstrat 2 in einer Schichtdicke von etwa 3 cm bis 15 cm und die dritte Schicht bilden die in das Substrat 2 eingesetzten, vorkultivierten etwa 5 bis 15 Stück mehrjährigen bodendeckenden Staudenpflanzen 4 oder Kleingehölze verschiedener Art. Zwischen der Schafwollmatte 3 und dem Substrat 2 sind 3 bis 15 Stück Geophyten 5 (Knollen oder Zwiebelpflanzen) verteilt eingebracht. Ein zum Verlegen fertiger Pflanzenziegel 1 wird etwa im Zentrum mit einer Solitärstaude 6 bepflanzt. Diese kann auch erst nach einer Anwachszeit der bodendeckenden Staudenpflanzen 4, etwa 2 bis 3 Monaten später, in den Pflanzenziegel 1 nachgepflanzt werden.

Die Figur 2 zeigt mehrere aneinandergelegte Pflanzenziegel 1 einer ersten Kategorie mit bodendeckenden Staudenpflanzen 4 sowie flach wachsenden Stauden als Solitärpflanze 6 in einer schematischen Darstellung.

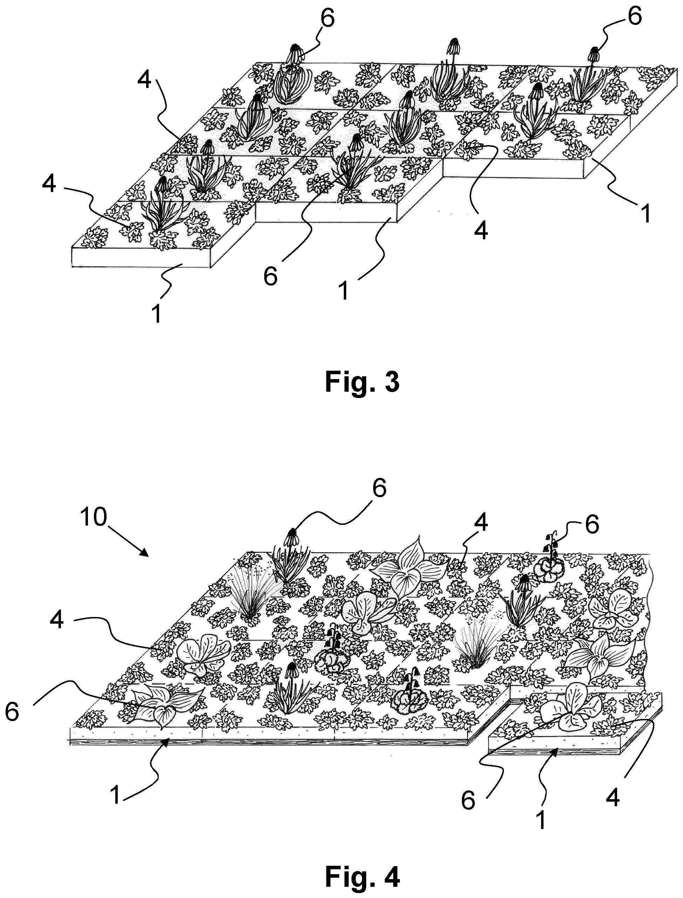

Die Figur 3 zeigt mehrere aneinandergelegte Pflanzenziegel 1 einer zweiten Kategorie von Pflanzenziegel 1, welche mit hoch wachsenden Solitärpflanzen 6 bepflanzt sind, schematisch dargestellt.

In der Figur 4 ist eine aus mehreren Kategorien von Pflanzenziegeln 1 erstellte Pflanzendecke 10 in einer schematischen Darstellung gezeigt. Durch Anordnen unterschiedlicher Kategorien von Pflanzenziegeln 1 nebeneinander oder durch Aneinanderreihen von Pflanzenziegel der gleichen Kategorie lässt sich ein ausgewogenes Bild einer Pflanzendecke im Voraus gestalten, planen und schliesslich umsetzen. Dabei kann die Lage der Pflanzendecke 10, wie beispielsweises Schatten- oder Sonnenlage, Hanglage und dergleichen in der Gestaltung berücksichtigt werden. In den schematischen Zeichnungen 2 bis 4 sind die von der Jahreszeit abhängig blühenden Geophyten 5 nicht eingezeichnet.

Für die Herstellung der Pflanzenziegel werden die Schafwollmatten 3 auf eine Grösse von 36 cm x 56 cm zugeschnitten und in Staudenkisten gelegt. Diese Kisten mit einem Aussenmass von beispielsweise 40cm x 60 cm x 8 cm bis 17cm weisen einen Stegboden und einen geschlossenen Innenboden 8 mit Löchern 9 auf. Auf die Schafwollmatte 3 werden 3-15 Stück Geophyten (verschiedene Knollen oder Zwiebelpflanzen) gelegt. Anschliessend wird die Kiste mittels einer Erdabfüllmaschine bis zum Rand voll mit dem Substrat 2 aus bodenunabhängiger, gärtner üblicher Kulturerde abgefüllt und danach auf Paletten gestapelt und zu Freiland-Kulturflächen gebracht. Dort werden die Kisten 7 mit 8 bis 15 vorkultivierten Jungpflanzen verschiedener Arten bepflanzt. Diese Staudenpflanzen 4 sind mehrjährige, bodenbedeckende Stauden und Kleingehölze sowie Solitärstauden 6. Die Kisten 7 werden anschliessend in Beete zur Kulturführung aufgestellt. Die bepflanzten Kisten 7 müssen nun immer feucht gehalten werden, gedüngt und vor Pilz und Schädlingsbefall bewahrt werden. Die Solitärstauden 6 können auch nach ca. 2-3 Monaten in den einzelnen Pflanzenziegeln 1 nachgepflanzt werden. Nach weiteren 2-3 Monaten erreichen die Staudenpflanzen 4 in den Kisten 7 eine 100%ige Pflanzendichte und bilden mit einem zähen Wurzelfilz um die Schafwollmatte 3, welche fast zur Unkenntlichkeit verwachsen ist, den zum Verlegen fertigen Pflanzenziegel 1. Für den Verkauf bzw. den Transport werden die Pflanzenziegel 1 mit Angaben zur Bepflanzung mit den Staudenpflanzen 4, der Mischung der Geophyten 5 und der Solitärstaude 6 gekennzeichnet und in hohe Euro- Staudenkisten umgepackt und auf Paletten für den Versand gestapelt. Wenn nötig müssen teils höhere Solitärstauden 6 vor dem Versand zurück geschnitten werden. Die Produktionsdauer liegt für die Pflanzenziegel 1 bei etwa 5-6 Monaten, also einem Vegetationsjahr.

Mit den erfindungsgemässen Pflanzenziegeln 1 können Bepflanzungen auch im Voraus geplant und entsprechende Kategorien von Pflanzenziegeln 1 mit unterschiedlichen Knollenpflanzen 5 und/oder unterschiedlichen Solitärstauden 6 zu einer konzipierten Pflanzendecke10 zusammengestellt werden. Es ist auch denkbar, derartige Kategorien von Pflanzenziegeln 1 gemäss Kundenwünschen anzufertigen. Für einen Neubau oder nach Sanierungsarbeiten an Gebäuden und Gartenanlagen kann so beispielsweise die Bepflanzung, d.h. die Pflanzendecke 10, im Voraus geplant werden und unmittelbar nach Fertigstellung auf der zu bepflanzenden Erdfläche verlegt werden. Für eine Pflanzendecke von ca. 10 m² werden ca. 50 Pflanzenziegel 1 benötigt. Um eine entsprechend abgestimmte Bepflanzung dieser Pflanzendecke 10 zu erreichen werden etwa 5-15 Kategorien von Pflanzenziegel 1, also verschieden bepflanzte Pflanzenziegel 1, benötigt, die mit je einer anderen Solitärpflanze 6 bestückt sind. Bei der Auslieferung der Pflanzenziegel 1 sind diese bereits stark verwurzelt und können nach spezieller Anleitung ohne fachliche Grundkenntnisse auf einer bearbeiteten, lockeren Humusschicht verlegt werden. Die Pflanzenziegel 1 wurzeln innert weniger Wochen tief in die Humusschicht ein. Zur Anpassung an Ecken oder Ränder kann der Pflanzenziegel 1 beliebig mit einem Messer zugeschnitten werden ohne dass die Pflanzen 4 Schaden nehmen. Die derart nach Plan verlegten Pflanzenziegel 1 ergeben schliesslich eine geschlossene, harmonische Pflanzendecke 10 mit herausragenden Stauden 6 und verschiedenen Blütenpflanzen 4, 5 mit einer optimalen Blütendauer vom März bis Oktober.

Durch die hohe Biodiversität der verschiedenen Pflanzenziegel 1 besteht eine natürliche Verdrängungskonkurrenz gegenüber Wildkräutern. Dies führt zur Erhaltung einer geschlossenen Pflanzendecke 10 über Jahre und dadurch verbunden zu einem minimalen Pflegeaufwand. Nur ein einziger Rückschnitt der Pflanzenziegel 1 ist von November bis Februar erforderlich. Die Schafwollmatte 3 wird von Mikroorganismen zersetzt und gibt dabei den Pflanzen natürliche Nährstoffe frei die so als eine Art Langzeitdünger wirkt.

## Patentansprüche

1. Pflanzenziegel zum Auflegen auf Erdflächen mit einer Trägerschicht (3) aus verrottbarem Material und einem auf der Trägerschicht aufgebrachten Substrat (2) aus bodenunabhängiger, gärtnerüblicher Kulturerde, die keinen Torf und keine Kokosfaseranteile enthält, in welche Pflanzen (4) ein- und/oder aufbringbar sind, wobei das Substrat (2) mit 5 bis 15 Stück vorkultivierten, bodendeckenden Staudenpflanzen (4) und/oder Kleingehölzen verschiedener Art bepflanzt ist, welche eine flächendeckende Pflanzendichte auf dem Substrat (2) bilden, **dadurch gekennzeichnet, dass** die Staudenpflanzen (4) mehrjährige Pflanzen sind und dass die Trägerschicht (3) eine Schafwollmatte (3) aus genadelter Schafwolle ist und eine Dicke zwischen 0.5 cm und 4 cm aufweist.

2. Pflanzenziegel nach Anspruch 1, **dadurch gekennzeichnet, dass** das Substrat (2) auf der Schafwollmatte (3) mit einer Schichtdicke zwischen 3 cm und 10 cm aufgebracht ist.

3. Pflanzenziegel nach Anspruch 2, **dadurch gekennzeichnet, dass** der Pflanzenziegel (1) etwa quaderförmig ausgebildet ist, eine Seitenlänge zwischen 55 cm bis 60 cm, eine Breite zwischen 35 cm bis 40 cm und eine Höhe zwischen 3 cm bis 10 cm aufweist.

4. Pflanzenziegel nach einem der vorherigen Ansprüche, **dadurch gekennzeichnet, dass** zwischen der Schafwollmatte (3) und dem Substrat (2) 3 bis 15 Stück Geophyten (5) verteilt eingebracht sind und dass im Zentrum des Pflanzenziegels (1) eine Solitärstaude (6) angeordnet ist.

5. Verfahren zur Herstellung eines Pflanzenziegels (1) nach einem der Ansprüche 1 bis 4, **dadurch gekennzeichnet, dass** eine zugeschnittene Schafwollmatte (3) aus genadelter Schafwolle und eine Dicke zwischen 0.5 cm und 4 cm in eine Staudenkiste (7) mit einem geschlossenen Innenboden (8) mit Löchern (9) gelegt wird, anschliessend auf die Schafwollmatte (3) zwischen 5 und10 Stück Geophyten (5) gelegt werden und danach die Kiste (7) mittels einer Erdabfüllmaschine bis zum Rand voll mit einem Substrat (2) aus bodenunabhängiger, gärtnerüblicher Kulturerde, die keinen Torf und keine Kokosfaseranteile enthält, abgefüllt und auf eine Freiland-Kulturfläche gebracht wird, wo die Kiste (7) mit 5 bis 15 Jungpflanzen von verschiedenen vorkultivierten mehrjährigen, bodendeckenden Staudenpflanzen (4) und/oder Kleingehölzen bepflanzt wird, in ein Beet zur Kulturführung aufgestellt und etwa 2 bis 3 Monate feucht gehalten, gedüngt und vor Pilz- und Schädlingsbefall bewahrt wird, bis eine flächendeckende Pflanzendichte auf dem Substrat (2) gebildet ist.

6. Verfahren zur Herstellung eines Pflanzenziegels (1) nach Anspruch 5, **dadurch gekennzeichnet, dass** die Kiste (7) zusätzlich zu den Staudenpflanzen (4) und/oder Kleingehölzen mit einer Solitärstaude (6) bepflanzt wird.

7. Verwendung der Pflanzenziegel (1) nach einem der Ansprüche 1 bis 4 zur Erstellung einer Pflanzendecke (10) wobei die Bepflanzungen im Voraus geplant und die Pflanzenziegel (1) der entsprechenden Kategorien mit unterschiedlichen Knollenpflanzen (5) und/oder unterschiedlichen Solitärstauden (6) zu einer konzipierten Pflanzendecke (10) zusammengestellt und für die Bepflanzung bereitgestellt und anschliessend nach Plan auf einer lockeren Humusschicht verlegt werden.

## Claims

1. Plant brick for laying on earth surfaces, having a carrier layer (3) of decomposable material and a substrate (2) applied to the carrier layer and made of ground-independent arable soil which is generally used by gardeners and which has no peat and coconut fiber content, into which plants (4) can be introduced and/or applied, wherein the substrate (2) is planted with 5 to 15 pieces of pre-cultivated, ground-covering shrub plants (4) and/or small woody plants of various species, which form a full-coverage plant density on the substrate (2), **characterized in that** the shrub plants (4) are perennials and that the carrier layer (3) is a sheep wool mat (3) made of needled sheep wool and has a thickness between 0.5 cm and 4 cm.

2. Plant brick according to claim 1, **characterized in that** the substrate (2) is applied to the sheep wool mat (3) with a layer thickness between 3 cm and 10 cm.

3. Plant brick according to claim 2, **characterized in that** the plant brick (1) is approximately cuboid, has a side length between 55 cm to 60 cm, a width between 35 cm to 40 cm and a height between 3 cm to 10 cm.

4. Plant brick according to one of the preceding claims, **characterized in that** between the sheep wool mat (3) and the substrate (2) 3 to 15 pieces of geophytes (5) are introduced in a distributed manner and that a solitary shrub plant (6) is arranged in the center of the plant brick (1).

5. Method for producing a plant brick (1) according to one of claims 1 to 4, **characterized in that** a sheep wool mat (3) cut to size and made of needled sheep wool and with a thickness between 0.5 cm and 4 cm is placed in a shrub box (7) with a closed inner bottom (8) with holes (9), thereafter between 5 and 10 pieces of geophytes (5) are then laid on the sheep wool mat (3) and after that the box (7) is fully filled to the edge by means of a soil filling machine with a substrate (2) made of ground-independent arable soil which is generally used by gardeners, having no peat and coconut fiber content, and placed on a field-cultivated area where the box (7) is planted with 5 to 15 seedlings of various pre-cultivated perennial ground-covering shrub plants (4) and/or small woody plants, placed in a bed for cultivation and kept moist for about 2 to 3 months, fertilized and preserved from fungal and pest infestation, until a comprehensive plant density is formed on the substrate (2).

6. A method for producing a plant brick (1) according to claim 5, **characterized in that** the box (7) is planted in addition to the shrub plants (4) and/or small woody plants with a solitary shrub plant (6).

7. Use of the plant bricks (1) according to one of claims 1 to 4 for creating a plant cover (10), wherein the plantings are planned in advance and the plant bricks (1) of the corresponding categories are assembled with different bulbous plants (5) and/or different solitary shrub plants (6) to form a designed plant cover (10) and are provided for planting and then laid according to plan on a loose humus layer.

## Revendications

1. Motte de plantes à poser sur des surfaces en terre, avec une couche de support (3) faite de matériau putrescible et un substrat (2) appliqué sur la couche de support, fait de terreau usuel en jardinage pour tous sols qui ne contient ni tourbe, ni fractions de fibre de coco et dans ou sur lequel des plantes (4) peuvent être installées, dans laquelle 5 à 15 pieds de plantes vivaces (4) couvre-sol persistantes et/ou d'arbrisseaux de différentes espèces, préalablement cultivés, d'une densité suffisante pour couvrir le sol, sont plantés dans le substrat (2), **caractérisée en ce que** les planes vivaces (4) sont pluriannuelles et **en ce que** la couche de support (3) est une nappe de laine de mouton (3) faite de laine de mouton aiguilletée et présente une épaisseur comprise entre 0,5 et 4 cm.

2. Motte de plantes selon la revendication 1, **caractérisée en ce que** le substrat (2) est appliqué sur la nappe de laine de mouton (3) sur une épaisseur de couche comprise entre 3 cm et 10 cm.

3. Motte de plantes selon la revendication 2, **caractérisée en ce que** la motte de plantes (1) est approximativement quadrangulaire et présente une longueur de côté de 55 cm à 60 cm, une largeur de 35 cm à 40 cm et une hauteur de 3 cm à 10 cm.

4. Motte de plantes selon l'une des revendications précédentes, **caractérisée en ce que** 3 à 15 géophytes (5) sont installés et répartis entre la nappe de laine de mouton (3) et le substrat (2) et **en ce qu'**une plante vivace solitaire (6) est disposée au centre de la motte de plantes (1).

5. Procédé pour la fabrication d'une motte de plantes (1) selon l'une des revendications 1 à 4, **caractérisé en ce qu'**une nappe de laine de mouton (3) découpée en laine de mouton aiguilletée d'une épaisseur de 0,5 cm à 4 cm est placée dans un bac à vivaces (7) possédant un fond intérieur (8) fermé muni de trous (9), puis 5 à 10 géophytes (5) sont posés sur la nappe de laine de mouton (3) et le bac (7) est ensuite rempli à ras bord, au moyen d'une machine de remplissage de terre, avec un substrat (2) fait de terreau usuel en jardinage pour tous sols qui ne contient ni tourbe, ni fractions de fibre de coco, et transporté sur une aire de culture en plein champ où le bac (7) est planté de 5 à 15 jeunes plants de différentes plantes vivaces couvre-sol persistantes (4) et/ou arbrisseaux cultivés au préalable, placé sur une plate-bande de culture et maintenu humide pendant environ 2 à 3 mois, fertilisé et protégé contre les attaques de champignons et d'animaux nuisibles, jusqu'à ce qu'une densité végétale couvrant la surface se soit formée sur le substrat (2).

6. Procédé pour la fabrication d'une motte de plantes (1) selon la revendication 5, **caractérisé en ce qu'**en plus des plantes vivaces (4) et/ou arbrisseaux, une vivace solitaire (6) est plantée dans le bac (7).

7. Utilisation de la motte de plantes (1) selon l'une des revendications 1 à 4 pour créer une couverture végétalisée (10) dans laquelle les plantations sont planifiées à l'avance et les mottes de plantes (1) des catégories correspondantes sont composées avec différentes plantes à bulbe (5) et/ou différentes vivaces solitaires (6) pour former une couverture végétalisée (10) conçue et préparées en vue de la plantation, puis posées selon un plan sur une couche d'humus meuble.
